(19) **Europäisches Patentamt European Patent Office Office européen des brevets**

(11) **EP 4 328 788 B1**

(12) **EUROPEAN PATENT SPECIFICATION**

(45) Date of publication and mention of the grant of the patent:
**18.02.2026 Bulletin 2026/08**

(21) Application number: **22869065.7**

(22) Date of filing: **05.09.2022**

(51) International Patent Classification (IPC):
**G06Q 10/0631** $^{(2023.01)}$

(52) Cooperative Patent Classification (CPC):
**G06Q 10/0631; G06F 30/20;** F24F 11/46;
F24F 2140/20; F24F 2140/50; G06F 2119/06;
G06F 2119/08

(86) International application number:
**PCT/CN2022/117104**

(87) International publication number:
**WO 2023/040694 (23.03.2023 Gazette 2023/12)**

(54) **METHOD AND APPARATUS FOR CALCULATING ENERGY EFFICIENCY OF REFRIGERATING MACHINE ROOM, AND ELECTRONIC DEVICE**

VERFAHREN UND VORRICHTUNG ZUR BERECHNUNG DER ENERGIEEFFIZIENZ EINES KÜHLMASCHINENRAUMS UND ELEKTRONISCHE VORRICHTUNG

PROCÉDÉ ET APPAREIL DE CALCUL D'EFFICACITÉ ÉNERGÉTIQUE D'UNE SALLE DE MACHINES FRIGORIFIQUES, ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2021 CN 202111094631**

(43) Date of publication of application:
**28.02.2024 Bulletin 2024/09**

(73) Proprietors:
  • **Shanghai Kong Intelligent Building Co., Ltd**
    **Shanghai 200080 (CN)**
  • **GD Midea Heating & Ventilating Equipment Co., Ltd.**
    **Foshan, Guangdong 528311 (CN)**

(72) Inventors:
  • **LUO, Liang**
    **Shanghai 200080 (CN)**
  • **QIU, Yide**
    **Shanghai 200080 (CN)**
  • **LI, Yuanyang**
    **Shanghai 200080 (CN)**
  • **YI, Xin**
    **Shanghai 200080 (CN)**
  • **WEI, Jiawei**
    **Shanghai 200080 (CN)**
  • **HU, Jiongpei**
    **Shanghai 200080 (CN)**
  • **GAO, Bing**
    **Shanghai 200080 (CN)**

(74) Representative: **Whitlock, Holly Elizabeth Ann et al**
    **Maucher Jenkins**
    **Seventh Floor Offices**
    **Artillery House**
    **11-19 Artillery Row**
    **London SW1P 1RT (GB)**

(56) References cited:
CN-A- 108 758 979     CN-A- 111 076 345
CN-A- 111 076 345     CN-A- 111 237 989
CN-A- 112 105 233     CN-A- 112 944 559
CN-A- 113 806 938

## Description

### TECHNICAL FIELD

The present disclosure relates to the technical field of central air-conditioning, and more particularly to a method and a device for calculating an energy efficiency of a refrigeration machine room, and an electronic device.

### BACKGROUND

At present, the energy efficiency of the refrigeration machine rooms is too low, and the COP (Coefficient of Performance) of most refrigeration machine rooms does not exceed 3.5. In response to the energy-saving and emission reduction goals, the renovation, expansion, and new refrigeration machine room projects have gradually put forward requirements for the overall operational energy efficiency of the refrigeration machine room in the early stages of construction. Most projects require the overall energy efficiency of the refrigeration machine room to be no less than 5.0, and the new refrigeration machine room projects have even reached 5.5 to 6.0. In the early stages, project manufacturers usually conduct energy efficiency simulations for the overall energy efficiency of the refrigeration machine room of the project, in order to display the simulation results that the project can achieve during bidding or project communication. However, all manufacturers conduct simulation analysis through self-developed programs, and the calculation process is not precise enough. The credibility of the simulated results needs to be verifiec

Document CN 111 076 345 A discloses a predicating device and method for a central air-conditioning system as well as terminal equipment.

### SUMMARY

In view of this, the present disclosure provides a method and a device for calculating an energy efficiency of a refrigeration machine room, and an electronic device. The calculation process of the energy efficiency is refined, and the calculation results are highly reliable, which can complete simulation analysis of the hourly energy efficiency of the refrigeration machine room throughout a year.

Embodiments of the present disclosure provide a method for calculating an energy efficiency of a refrigeration machine room, and the method includes: calculating an hourly cooling load of a cooling area; where the hourly cooling load of the cooling area represents a refrigerating capacity of the refrigeration machine room in various time periods; determining an hourly power consumption of a chiller unit, an hourly power consumption of a water pump, and an hourly power consumption of a cooling tower of the refrigeration machine room; and calculating an energy efficiency of a water system of the refrigeration machine room based on the hourly cooling load, the hourly power consumption of the chiller unit, the hourly power consumption of the water pump, and the hourly power consumption of the cooling tower.

Embodiments of the present disclosure provide a device for calculating an energy efficiency of a refrigeration machine room, the device includes: an hourly cooling load calculation module, configured for calculating an hourly cooling load of a cooling area; where the hourly cooling load of the cooling area represents a refrigerating capacity of the refrigeration machine room in various time periods; a refrigeration machine room power consumption calculation module, configured for determining an hourly power consumption of a chiller unit, an hourly power consumption of a water pump, and an hourly power consumption of a cooling tower of the refrigeration machine room; and a water system energy efficiency calculation module, configured for calculating an energy efficiency of a water system of the refrigeration machine room based on the hourly cooling load, the hourly power consumption of the chiller unit, the hourly power consumption of the water pump, and the hourly power consumption of the cooling tower.

Embodiments of the present disclosure provide an electronic device, which includes a processor and a memory, where the memory stores computer executable instructions capable of being executed by the processor, and the processor executes the computer executable instructions to implement the method for calculating the energy efficiency of the refrigeration machine room mentioned above.

Embodiments of the present disclosure provide a computer readable storage medium storing computer executable instruction, where when the computer executable instructions are invoked and executed by a processor, the processor is caused to implement the method for calculating the energy efficiency of the refrigeration machine room mentioned above.

The other features and advantages of the present disclosure will be described in subsequent specifications, or some of features and advantages can be inferred or unquestionably determined from the specifications, or can be obtained by implementing the aforementioned techniques of the present disclosure.

In order to make the above objectives, features, and advantages of the present disclosure more apparent and understandable, the following text provides preferred embodiments, and in conjunction with the accompanying drawings, provides a detailed explanation as follows.

## BRIEF DESCRIPTION OF THE DRAWINGS

In order to explain the embodiments of the present application more clearly, a brief introduction regarding the accompanying drawings that need to be used for describing the embodiments of the present application or the prior art is given below; it is obvious that the accompanying drawings described as follows are only some embodiments of the present application, for those skilled in the art, other drawings can also be obtained according to the current drawings on the premise of paying no creative labor.

FIG. 1 is a flowchart of a method for calculating an energy efficiency of a refrigeration machine room provided by an embodiment of the present disclosure;
FIG. 2 is a flowchart of another method for calculating an energy efficiency of a refrigeration machine room provided by an embodiment of the present disclosure;
FIG. 3 is a schematic diagram of an energy efficiency output of a refrigeration machine room provided by an embodiment of the present disclosure;
FIG. 4 is a schematic diagram of a result data table provided by an embodiment of the present disclosure;
FIG. 5 is a schematic diagram of another result data table provided by an embodiment of the present disclosure;
FIG. 6 is a structural schematic diagram of a device for calculating an energy efficiency of a refrigeration machine room provided by an embodiment of the present disclosure;
FIG. 7 is a structural schematic diagram of another device for calculating an energy efficiency of a refrigeration machine room provided by an embodiment of the present disclosure; and
FIG. 8 is a structural schematic diagram of an electronic device provided by an embodiment of the present disclosure.

## DETAILED DESCRIPTION OF EMBODIMENTS

In order to make the purpose, technical scheme and advantages of the present disclosure more clear, the technical scheme of the present disclosure will be clearly and completely described below in conjunction with the attached drawings. Obviously, the described embodiments are some of the present disclosure rather than all embodiments. Based on the embodiments in the present disclosure, all other embodiments obtained by those skilled in the art without creative labor fall within the protection scope of the present disclosure.

At present, project manufacturers generally conduct energy efficiency simulation analysis of the refrigeration machine room through self-developed programs, and the calculation process is not precise enough. The credibility of the simulated results needs to be verified. In view of the problems of different energy efficiency calculation methods of the manufacturers, imprecise calculation process, and calculation results to be verified, the embodiments of the present disclosure propose a fine calculation method, and through necessary processes such as an annual load simulation analysis, a pipeline system optimization design, device optimization and selection, device condition switching settings in the system, and optimization configuration of the automatic control system, the simulation analysis of hourly energy efficiency of the computer room system can be completed throughout a year. At the same time, the method further provides verification standards for the results of the device and system optimization of the refrigeration machine room.

Based on this, the embodiments of the present disclosure provide a method and a device for calculating an energy efficiency of a refrigeration machine room, and an electronic device; and specifically relates to a refined method for calculating an operation energy efficiency of the refrigeration machine room, which can better complete the energy efficiency analysis and calculation of 8760 hours throughout a year based on the optimized system pipeline and supporting device parameters.

In order to facilitate the understanding of the embodiments, the method for calculating the energy efficiency of the refrigeration machine room disclosed in the embodiments of the present disclosure is first introduced in detail.

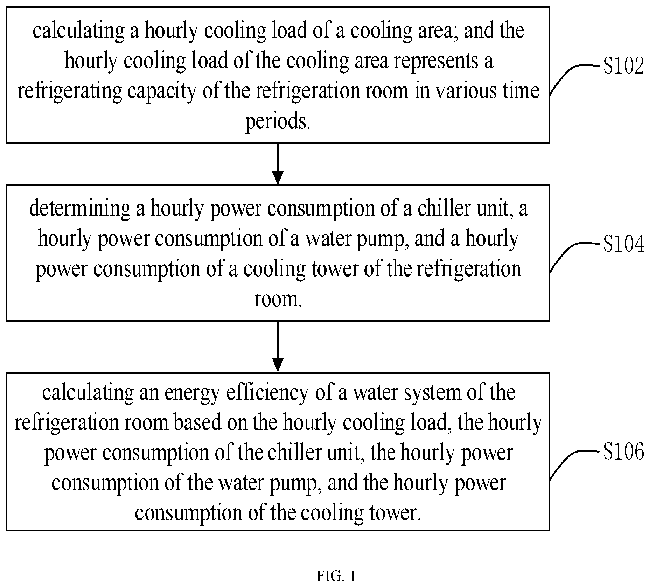

An embodiment of the present disclosure provides a method for calculating an energy efficiency of a refrigeration machine room, as shown in FIG. 1, which shows a flowchart of the method for calculating the energy efficiency of the refrigeration machine room, and the method for calculating the energy efficiency of the refrigeration machine room includes the following steps:

In step S102, calculating an hourly cooling load of a cooling area; where the hourly cooling load of the cooling area represents a refrigerating capacity of the refrigeration machine room in various time periods.

The cooling area in the embodiment can be the refrigeration machine room of the central air-conditioning, and the devices related to the central air-conditioning can be placed inside the refrigeration machine room, such as a chiller unit, a cooling/chilled water pump, a cooling tower and other devices.

The cooling load can refer to the heat that must be taken away from the room by the air-conditioning system in order to maintain the required heat and humidity environment of the building and the required indoor temperature, which can also be called the cooling load of the air-conditioning room; or the refrigerating amount that needs to be supplied to the room at a certain time can be called the cooling load, the cooling load includes sensible heat and latent heat. On the contrary, if the air-conditioning system needs to heat the room to compensate for the loss of heat in the room, the heat supplied to the room is called the heat load.

The hourly cooling load can represent the refrigerating capacity of the refrigeration machine room in various time periods, such as: the refrigerating capacity of 0 o'clock to 1 o'clock every day, the refrigerating capacity of 1 o'clock to 2 o'clock ... the refrigerating capacity of 23 o'clock to 24 o'clock, and the above refrigerating capacity is the hourly cooling load.

In step S104, determining an hourly power consumption of a chiller unit, an hourly power consumption of a water pump, and an hourly power consumption of a cooling tower of the refrigeration machine room.

In the embodiment, the hourly power consumption of the chiller unit can be the hourly COP of the chiller unit, and the COP of the chiller unit is mainly affected by chilled water outlet temperature $t_{do}$, the cooling water inlet temperature $t_{qi}$ and unit load rate $\eta$, in which the chilled water outlet temperature $t_{do}$ can be a constant value or a varying value. The formula of COP of the chiller unit can be obtained by fitting method, and the hourly COP of chiller unit can be calculated by using the above formula.

In the embodiment, the hourly power consumption of the water pump can be the actual power of the water pump. The actual power of the water pump can be calculated according to the actual frequency of the water pump, the actual flow of the water pump, the rated power of the water pump, the rated frequency of the water pump, the rated flow of the water pump and other parameters.

In the embodiment, the hourly power consumption of the cooling tower can be the actual power of the cooling tower. The actual power of the of the cooling tower can be calculated according to the actual flow of the cooling tower, the rated frequency of the cooling tower, the rated flow of the cooling tower and other parameters.

In step S106, calculating an energy efficiency of a water system of the refrigeration machine room based on the hourly cooling load, the hourly power consumption of the chiller unit, the hourly power consumption of the water pump, and the hourly power consumption of the cooling tower.

After the hourly cooling load, the hourly power consumption of the chiller unit, the hourly power consumption of water pump, and the hourly power consumption of the cooling tower are calculated, the Energy Efficiency Ratio (EERS) of the energy efficiency of the water system in the refrigeration machine room can be calculated based on the above energy consumption.

Therefore, in the embodiment, before calculating the energy efficiency EERS of the water system in the refrigeration machine room, the hourly cooling load of the cooling area, the hourly power consumption of the chiller unit, the hourly power consumption of the water pump, and the hourly power consumption of the cooling tower are calculated in advance, and the energy efficiency calculation process is refined and highly reliable.

The operating state of the devices in the refrigeration machine room can be adjusted according to the energy efficiency of the water system after the energy efficiency of the water system is calculated. In general, if the energy efficiency of the water system is less than 3.5, which means that the energy efficiency of the water system in the refrigeration machine room is low, it is necessary to adjust the operating state of the devices to improve the energy efficiency of the water system in the refrigeration machine room. For example, to adjust the operating time of each device and replace or maintain the devices that consume high energy.

The embodiments of the present disclosure provide a method for calculating the energy efficiency of the refrigeration machine room, where the energy efficiency of the water system of the refrigeration machine room is calculated based on the hourly cooling load of the cooling area, the hourly power consumption of the chiller unit, the hourly power consumption of the water pump, and the hourly power consumption of the cooling tower; and the operating state of the devices in the refrigeration machine room according to the energy efficiency of the water system can be adjusted. The energy efficiency calculation process in the method is refined, and the results are highly reliable. It can complete the simulation analysis of the energy efficiency of the refrigeration machine room throughout a year, and also provides a verification standard for the device optimization and system deepening results of the refrigeration machine room.

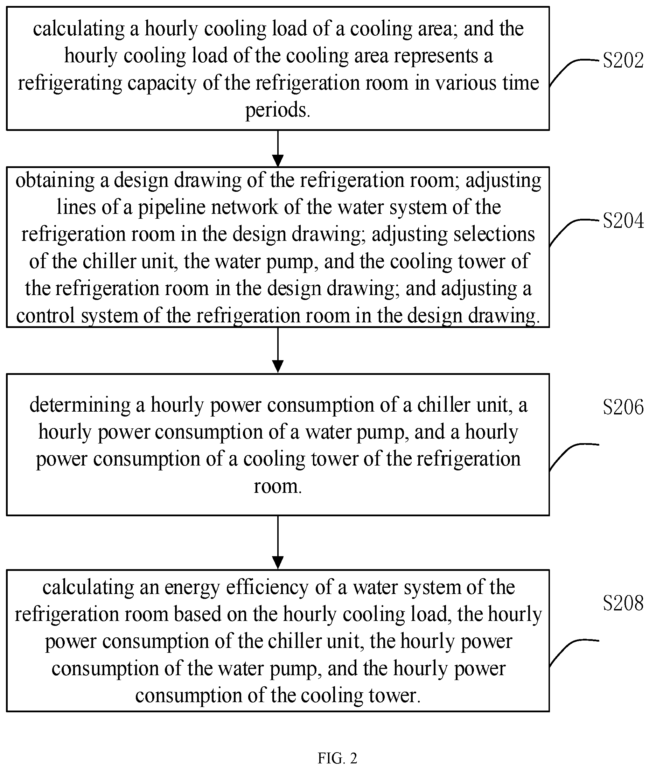

Another embodiment of the present disclosure provides another method for calculating the energy efficiency of the refrigeration machine room, which is realized on the basis of the above embodiments. FIG. 2 shows a flowchart of another method for calculating the energy efficiency of the refrigeration machine room. The method for calculating the energy efficiency of the refrigeration machine room in the embodiment can include the following steps:

In step S202, calculating an hourly cooling load of a cooling area; and the hourly cooling load of the cooling area represents a refrigerating capacity of the refrigeration machine room in various time periods.

The hourly cooling load of the cooling area can be calculated by analyzing the hourly cooling load throughout a year, and the hourly cooling load calculation of 8760 hours throughout a year is a prerequisite for energy efficiency analysis. There are at least two ways to calculate the hourly cooling load of the cooling area, the first way can be: establishing a first load model of the cooling area on a floor plan; defining characteristic parameters of devices and room areas of the cooling area on the first load model; and determining an hourly cooling load of each of the room areas in the refrigeration machine room based on the first load model.

The software platform DeST (Designer's Simulation Toolkit) can be used to simulate the building environment and HVAC (Heating, Ventilation, and Air Conditioning) system to establish the first load model of the cooling area on the basis of the floor plan. The characteristic parameters of the device and room areas of the cooling area are defined on the first load model according to the design drawings and instructions of the refrigeration machine room, then the hourly cooling load within different areas of the required time period is output.

In addition, the second way to calculate the hourly cooling load of the cooling area can be as follows: obtaining design parameters of the cooling area, and establishing a second load model of the refrigeration machine room based on the design parameters; and determining the hourly cooling load of the cooling area based on the second load model.

In the second way, the measured data of existing projects can be used to establish the second load model, and the actual operating parameters of the same functional buildings located in the same or similar meteorological environment can be used to substitute the second load model into the project to be calculated, and the annual hourly cooling load of the cooling area can be obtained according to the design parameters of the target project and the local meteorological parameters.

In step S204, obtaining a design drawing of the refrigeration machine room; adjusting lines of a pipeline network of the water system of the refrigeration machine room in the design drawing; adjusting selections of the chiller unit, the water pump, and the cooling tower of the refrigeration machine room in the design drawing; and adjusting a control system of the refrigeration machine room in the design drawing.

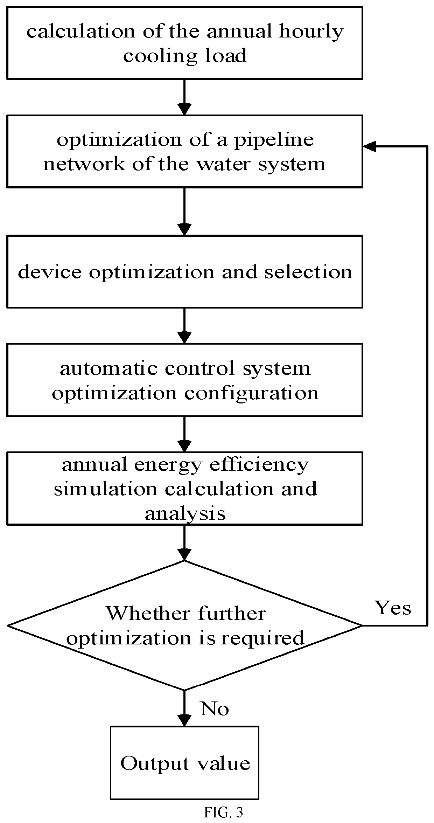

After the hourly cooling load is calculated, the design drawing can be optimized. As shown in FIG. 3, which shows a schematic diagram of energy efficiency output of the refrigeration machine room, the energy efficiency output process of the refrigeration machine room can include: calculation of the annual hourly cooling load, optimization of a pipeline network of the water system, device optimization and selection, automatic control system optimization configuration, and annual energy efficiency simulation calculation and analysis.

In the process of optimizing the pipeline network of the water system in the design drawing, the pipeline network of the water system in the refrigeration machine room can be optimized to a reasonable and low-resistance state by reducing elbows, selecting low-resistance valves, fine-fitting pipe diameters, and guiding the pipeline direction by Building Information Modeling (BIM), and so on.

In the process of device optimization and selection, which mainly includes: optimization and selection of the chiller unit, optimization of the chilled water pump, optimization of the cooling water pump, and optimization of the cooling tower, and so on. The optimization methods of the chiller include: increasing the heat transfer of the cylinder, reducing the resistances of the evaporator and the condenser, appropriately increasing the outlet temperature or temperature difference of the chilled water; the optimization and selection of the chilled water pump and cooling water pump can select high-efficiency device according to the pipeline optimization results; the optimization methods of the cooling tower include: increasing the heat exchange surface of the packing, increasing the tower body, etc., so as to improve the heat exchange effect of the cooling side.

In the process of the optimization configuration of the automatic control system, based on the performance curve and prediction model of the equipment in the refrigeration machine room, relevant logic such as machine cutting algorithms can be written, and precise intelligent device can be selected for feedback and action to achieve efficient and intelligent operation of the system.

In step S206, determining an hourly power consumption of a chiller unit, an hourly power consumption of a water pump, and an hourly power consumption of a cooling tower of the refrigeration machine room.

The hourly power consumption of a chiller unit is related to the hourly unit load rate, chilled water outlet temperature and cooling water inlet temperature of the refrigeration machine room, and the hourly power consumption of chiller unit can be calculated by the following steps: determining an hourly unit load, an hourly unit load rate, a chilled water outlet temperature, and a cooling water inlet temperature of the refrigeration machine room; determining an hourly energy efficiency of the chiller unit of the refrigeration machine room based on the chilled water outlet temperature, the cooling water inlet temperature, and the hourly unit load rate; and determining an hourly power consumption of the chiller unit based on the hourly energy efficiency of the chiller unit and the hourly unit load. The chilled water outlet temperature can be a constant value or a varying value, and the calculation methods of the constant value or the varying value are different for the hourly energy efficiency of the chiller unit.

In case that the chilled water outlet temperature is the constant value, the hourly energy efficiency of the chiller unit of the refrigeration machine room can be calculated by a following formula:

$$\mathrm{COP} = a_1 + \frac{a_2}{t_{qi}} + a_3 \times k + \frac{a_4}{t_{qi}^2} + a_5 \times k^2 + \frac{a_6 \times \eta}{t_{qi}} + \frac{a_7}{t_{qi}^3} + a_8 \times \eta^3 + \frac{a_9 \times \eta^2}{t_{qi}} + \frac{a_{10} \times \eta}{t_{qi}^2}$$ ; where the COP represents the hourly energy efficiency of the chiller unit of the refrigeration machine room, the $a_1$-$a_{10}$ represent fitting coefficients, the $t_{qi}$ represents the cooling water inlet temperature, and the $\eta$ represents the hourly unit load rate. The fitting formula is used to fit data using different load rates and COP under different cooling water conditions provided by the unit manufacturer with constant chilled water outlet temperature.

In the case that the chilled water outlet temperature is a constant value, the main factors affecting the actual COP of the chiller unit are the cooling water inlet temperature $t_{qi}$ and the unit load rate $\eta$, therefore, the above formula can be obtained by fitting data with different load rates and COP under different cooling water temperatures provided by the unit manufacturer for constant chilled water outlet temperature.

In the case that the chilled water outlet temperature is a varying value, the hourly energy efficiency of the chiller unit of the refrigeration machine room can be calculated by a following formula: $COP = b_1 \times t_{do}^3 + b_2 \times t_{qi}^3 + b_3 \times \eta^3 + b_4 \times t_{do}^2 \times t_{qi} + b_5 \times t_{do}^2 \times \eta + b_6 \times t_{qi}^2 \times t_{do} + b_7 \times t_{qi}^2 \times \eta + b_8 \times \eta^2 \times t_{do} + b_9 \times \eta^2 \times t_{qi} + b_{10} \times t_{do} + b_{11} \times t_{qi} + b_{12} \times \eta + b_{13} \times t_{do} \times t_{qi} \times \eta + b_{14}$; where the COP represents the hourly energy efficiency of the chiller unit of the refrigeration machine room, $b_1$-$b_{14}$ represent fitting coefficients, $t_{do}$ represents the chilled water outlet temperature, and $t_{qi}$ represent the cooling water inlet temperature, and the $\eta$ represents the hourly unit load rate. The fitting formula is used to fit data using different load rates and COP under different cooling water conditions provided by the unit manufacturer with variation chilled water outlet temperature.

In the case that the chilled water outlet temperature is a varying value, the main factors affecting the actual COP of the chiller unit are the chilled water outlet temperature $t_{do}$, the cooling water inlet temperature $t_{qi}$ and the unit load rate $\eta$, therefore, the above formula can be obtained by fitting above three parameters.

In the above two formulas, where $a_1$-$a_{10}$ and $b_1$-$b_{14}$ are fitting coefficients, which are only related to the chiller unit and are determined by the model of the chiller unit. The fitting forms of the above two formulas are for reference and can be adjusted according to the actual needs. This embodiment does not limit the specific form of the formulas, but it is necessary to ensure that the fitting degree of the formulas meets the requirements and also to avoid over-fitting.

After the formula fitting is completed, the data of the hourly chilled water outlet temperature $t_{do}$, the hourly cooling water inlet temperature $t_{qi}$, and the unit load rate $\eta$ in the actual project can be substituted and fitted to obtain the fitting formula, the hourly COP value of the chiller unit can be obtained.

The chilled water outlet temperature can be calculated according to project requirements. If the chilled water outlet temperature in the project is a constant value, then only a binary function needs to be fitted based on different cooling water inlet temperatures, different load rates, and COP data under the chilled water outlet temperature. Similarly, if the chilled water outlet temperature is variable, the corresponding ternary function can be fitted.

The cooling water inlet temperature $t_{qi}$ of the unit is related to the local wet bulb temperature $t_w$, the specific relationship formula can be obtained by fitting parameters provided by the cooling tower manufacturer or parameters measured in the project. The local wet bulb temperature $t_w$ throughout a year can be exported using hourly meteorological parameter software for HVAC; the hourly unit load rate $\eta$ is mainly determined by the hourly cooling load calculated in the above steps, the hourly unit load rate $\eta$ is also related to the number of units operated. The number of units operated can be directly arranged according to the normal unit shutdown logic.

The hourly power consumption of the water pump of the refrigeration machine room can be calculated by a following formula: $p_1 = (f/f_e)^a \times p_e$; or $p_1 = (Q/Q_e)^b \times p_e$; where the $p_1$ represents the hourly power consumption of the water pump, the a and b are constants between 2.2 and 2.5, the f represents an actual operating frequency of the water pump, the Q represents an actual operating flow rate of the water pump, the $p_e$ represents a rated operating power of the water pump, the $f_e$ represents a rated operating frequency of the water pump, and the $Q_e$ represents a rated operating flow rate of the water pump.

The hourly power consumption of the water pump in the embodiment can be understood as the actual operating power of the water pump. When the water pump is running, the flow rate is proportional to the first power of the frequency, the head is proportional to the second power of the frequency, and the shaft power is proportional to the third power of the frequency. Therefore, the actual operating power $p_1$ of the water pump can be realized as follows: $p_1 = (f/f_e)^a \times p_e$. Due to the proportional relationship between the flow rate and the frequency, it can also be expressed as: $p_1 = (Q/Q_e)^3 \times p_e$.

In actual project testing, the operating power consumption is higher than the theoretical value. After data validation, it was found that the shaft power is proportional to the 2.2-2.5 power of the frequency, which can be used to determine the actual operating power of the water pump $p_1 = (f/f_e)^a \times p_e$; or $p_1 = (Q/Q_e)^b \times p_e$. It should be noted that the minimum flow rate of the chiller unit and the minimum operating frequency of the water pump need to be considered in the calculation process.

During the operation of the system, after the hourly load of the system is determined, the flow rate of the system can be calculated based on energy conservation under known fixed temperature difference conditions. Therefore, in the above calculation formula, the flow rate value can be used as the calculation condition for the operating power of the water pump. When the water pump is directly connected to the chiller unit, the flow rate of the unit is the flow rate of the water pump; and when the water pump and chiller unit are connected in parallel, the number of water pumps to be operated and the switching method need to be determined based on the total flow rate.

The hourly power consumption of the cooling tower in the embodiment can be understood as the actual power of the cooling tower, and the hourly power consumption of the cooling tower of the refrigeration machine room can be calculated by a following formula: $p_2 = (Q/Q_e)^3 \times p_e$; where the $p_2$ represents the hourly power consumption of the cooling tower, the Q represents a flow rate value of a total cooling water flow rate of the refrigeration machine room entering a single cooling tower, the $Q_e$ represents a rated flow rate of the cooling tower, and the $p_e$ represents a rated power of the cooling tower.

The power consumption of the cooling tower is relatively low in the system, and its operating power depends on the frequency of the air flow. In the calculation method, it is also believed that the fan speed is determined by the water flow rate and satisfies the relationship formula: $p_2 = (Q/Q_e)^3 \times p_e$. The cooling towers are usually arranged in parallel, where Q represents the total flow rate of cooling water entering a single cooling tower in the system, while $Q_e$ and $p_e$ represent the rated flow rate and the rated power of the cooling tower.

In Step S208, calculating an energy efficiency of a water system of the refrigeration machine room based on the hourly cooling load, the hourly power consumption of the chiller unit, the hourly power consumption of the water pump, and the hourly power consumption of the cooling tower.

Through the above step, the hourly cooling load of the cooling area, the hourly power consumption of the chiller unit, the hourly power consumption of the water pump, and the hourly power consumption of the cooling tower can be obtained, therefore, the energy efficiency of the water system of the refrigeration machine room can be calculated by a following formula: $EERs = \Sigma q / (\Sigma p + \Sigma p_1 + \Sigma p_2)$; the EERs represents the energy efficiency of the water system of the refrigeration machine room, the q represents the hourly cooling load, the p represents the hourly power consumption of the chiller unit, the $p_1$ represents the hourly power consumption of the water pump, and the $p_2$ represents the hourly power consumption of the cooling tower.

The hourly power consumption p of the chiller unit is calculated based on the hourly energy efficiency COP of the chiller unit, and the hourly power consumption p of the chiller unit is obtained by dividing the refrigerating capacity by the hourly energy efficiency COP of the chiller unit. The $p_1$ represents the hourly power consumption of the water pump, and the water pump includes a cooling water pump and a chilled water pump, and the hourly power consumption of the water pump is calculated by a following formula: the hourly power consumption of the water pump $\Sigma p_1 = \Sigma$ the hourly power consumption of the cooling water pump + $\Sigma$ the hourly power consumption of the chilled water pump.

In addition, the symbol $\Sigma$ represents the sum of corresponding values for each device, for example, a refrigeration machine room contains three water pumps, the $\Sigma p_1$ represents the sum of hourly power consumption of the three water pumps.

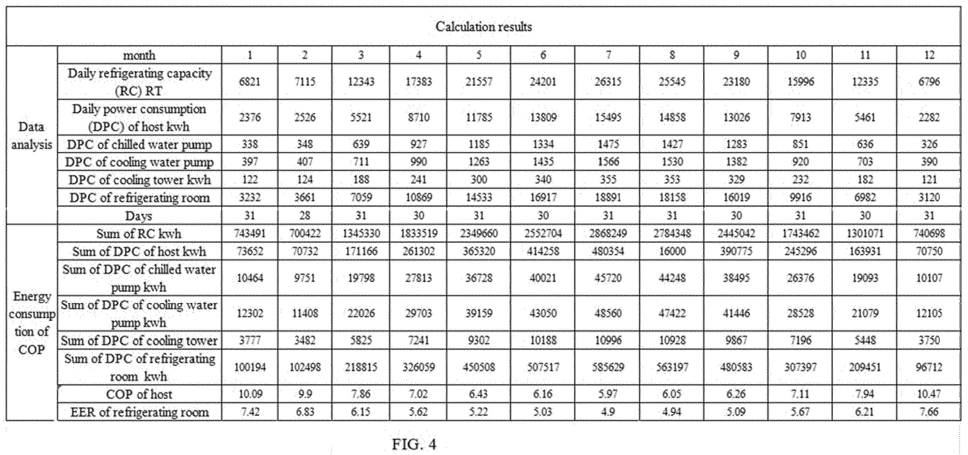

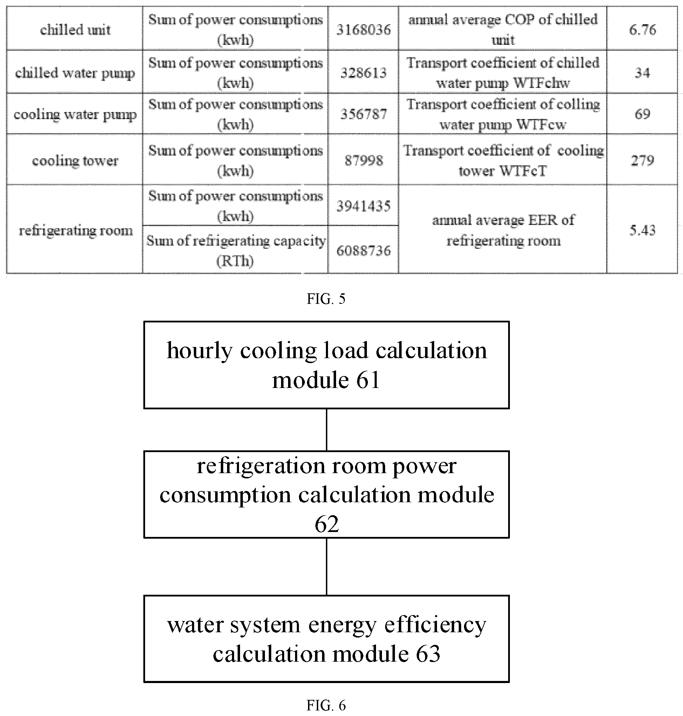

As shown in FIG. 4, which shows a schematic diagram of a result data table; and FIG. 5 shows a schematic diagram of another result data table, FIGS. 4 and 5 show the calculated result data after overall optimization in an actual industrial engineering project, which include monthly energy consumption data of various devices, energy efficiency data of the refrigeration machine room, etc., and the daily or hourly power consumption and energy efficiency of a single device can be exported.

In addition, the system layout and operation strategy in the refrigeration machine room can also be adjusted based on the energy efficiency of the water system. For example, the system layout and operation strategy in the refrigeration machine room are analyzed and optimized based on the energy efficiency of the water system in the refrigeration machine room.

In order to overcome the problem that the existing standards of methods for simulation calculation the energy efficiency are inconsistent, and the calculation process is not precise. The embodiments of the present disclosure propose above method to provide a refined calculation method for operating energy efficiency of the refrigeration machine room. The refined calculation of the operating energy efficiency of the refrigeration machine room is completed by analyzing and calculating the operating cooling load throughout a year, optimizing the design of the pipeline network, optimizing and selecting device, optimizing the configuration of the automatic control system, and conducting energy efficiency simulation analysis throughout a year.

The embodiments of the present disclosure further provides a method for calculating and analyzing the energy efficiency simulation throughout a year, which includes processes of calculating an hourly COP of a chiller unit, calculating hourly power consumption of a chilled water pump and a cooling water pump, calculating an hourly power consumption of a cooling tower, and calculating an energy efficiency of a water system of a chiller room throughout a year, etc., the simulation analysis of hourly energy efficiency of the computer room system can be completed throughout a year, at the same time, the method also provides verification standards for device optimization and system deepening results of the refrigeration machine room.

In addition, the application scope of the method provided in the embodiment is not limited to ordinary refrigeration units, but also includes hourly energy efficiency calculation of ice storage systems, hourly energy efficiency calculation of heat recovery unit systems, etc.

Corresponding to the above embodiments of the method , another embodiment of the present disclosure provides a device for calculating an energy efficiency of a refrigeration machine room, as shown in FIG. 6, which shows a structural schematic diagram of a device for calculating an energy efficiency of a refrigeration machine room. The device can include:

an hourly cooling load calculation module 61, configured for calculating an hourly cooling load of a cooling area; wherein the hourly cooling load of the cooling area represents a refrigerating capacity of the refrigeration machine room in various time periods;

a refrigeration machine room power consumption calculation module 62, configured for determining an hourly power consumption of a chiller unit, an hourly power consumption of a water pump, and an hourly power consumption of a cooling tower of the refrigeration machine room; and

a water system energy efficiency calculation module 63, configured for calculating an energy efficiency of a water system of the refrigeration machine room based on the hourly cooling load, the hourly power consumption of the chiller unit, the hourly power consumption of the water pump, and the hourly power consumption of the cooling tower.

The embodiments of the present disclosure provide a device for calculating the energy efficiency of the refrigeration machine room, the energy efficiency of the water system of the refrigeration machine room is calculated based on the hourly cooling load of the cooling area, the hourly power consumption of the chiller unit, the hourly power consumption of the water pump, and the hourly power consumption of the cooling tower; and the operating state of the devices in the refrigeration machine room according to the energy efficiency of the water system can be adjusted. The energy efficiency calculation process in the method is refined, and the results are highly reliable. It can complete the simulation analysis of the energy efficiency of the refrigeration machine room throughout a year, and also provides a verification standard for the device optimization and system deepening results of the refrigeration machine room.

The hourly cooling load calculation module can be configured for establishing a first load model of the cooling area on a floor plan; defining characteristic parameters of devices and room areas of the cooling area on the first load model; and determining an hourly cooling load of each of the room areas in the refrigeration machine room based on the first load model.

The hourly cooling load calculation module can be configured for obtaining design parameters of the cooling area, and establishing a second load model of the refrigeration machine room based on the design parameters; and determining the hourly cooling load of the cooling area based on the second load model.

The refrigeration machine room power consumption calculation module can be configured for determining an hourly unit load rate, a chilled water outlet temperature, and a cooling water inlet temperature of the refrigeration machine room; determining an hourly energy efficiency of the chiller unit of the refrigeration machine room based on the chilled water outlet temperature, the cooling water inlet temperature, and the hourly unit load rate; and determining an hourly power consumption of the chiller unit based on the hourly energy efficiency of the chiller unit and the hourly unit load.

The chilled water outlet temperature is a constant value; and the refrigeration machine room power consumption calculation module can be configured for calculating the hourly energy efficiency of the chiller unit of the refrigeration machine room by a following formula:

$$\text{COP} = a_1 + \frac{a_2}{t_{qi}} + a_3 \times k + \frac{a_4}{t_{qi}{}^2} + a_5 \times k^2 + \frac{a_6 \times \eta}{t_{qi}} + \frac{a_7}{t_{qi}{}^3} + a_8 \times \eta^3 + \frac{a_9 \times \eta^2}{t_{qi}} + \frac{a_{10} \times \eta}{t_{qi}{}^2}$$

; the COP represents the hourly energy efficiency of the chiller unit of the refrigeration machine room, the $a_1$-$a_{10}$ represent fitting coefficients, the $t_{qi}$ represents the cooling water inlet temperature, and the $\eta$ represents the hourly unit load rate.

The chilled water outlet temperature is a varying value; and the refrigeration machine room power consumption calculation module can be configured for calculating the hourly energy efficiency of the chiller unit of the refrigeration machine room by a following formula: $\text{COP} = b_1 \times t_{do}{}^3 + b_2 \times t_{qi}{}^3 + b_3 \times \eta^3 + b_4 \times t_{do}{}^2 \times t_{qi} + b_5 \times t_{do}{}^2 \times \eta + b_6 \times t_{qi}{}^2 \times t_{do} + b_7 \times t_{qi}{}^2 \times \eta + b_8 \times \eta^2 \times t_{do} + b_9 \times \eta^2 \times t_{qi} + b_{10} \times t_{do} + b_{11} \times t_{qi} + b_{12} \times \eta + b_{13} \times t_{do} \times t_{qi} \times \eta + b_{14}$; the COP represents the hourly energy efficiency of the chiller unit of the refrigeration machine room, $b_1$-$b_{14}$ represent fitting coefficients, $t_{do}$ represents the chilled water outlet temperature, and $t_{qi}$ represent the cooling water inlet temperature, and the $\eta$ represents the hourly unit load rate.

The refrigeration machine room power consumption calculation module can be configured for calculating the hourly power consumption of the water pump of the refrigeration machine room by a following formula: $p_1 = (f/f_e)^a \times p_e$; or $p_1 = (Q/Q_e)^b \times p_e$; the $p_1$ represents the hourly power consumption of the water pump, the a and b are constants between 2.2 and 2.5, the f represents an actual operating frequency of the water pump, the Q represents an actual operating flow rate of the water pump, the $p_e$ represents a rated operating power of the water pump, the $f_e$ represents a rated operating frequency of the water pump, and the $Q_e$ represents a rated operating flow rate of the water pump.

The refrigeration machine room power consumption calculation module can be configured for calculating the hourly power consumption of the cooling tower of the refrigeration machine room by a following formula: $p_2 = (Q/Q_e)^3 \times p_e$; the $p_2$ represents the hourly power consumption of the cooling tower, the Q represents a flow rate value of a total cooling water flow rate of the refrigeration machine room entering a single cooling tower, the $Q_e$ represents a rated flow rate of the cooling tower, and the $p_e$ represents a rated power of the cooling tower.

The water system energy efficiency calculation module can be configured for calculating the energy efficiency of the water system of the refrigeration machine room by a following formula: $EERs = \Sigma q/ (\Sigma p + \Sigma p_1 + \Sigma p_2)$; the EERs represents the energy efficiency of the water system of the refrigeration machine room, the q represents the hourly cooling load, the p represents the hourly power consumption of the chiller unit, the $p_1$ represents the hourly power consumption of the water pump, and the $p_2$ represents the hourly power consumption of the cooling tower.

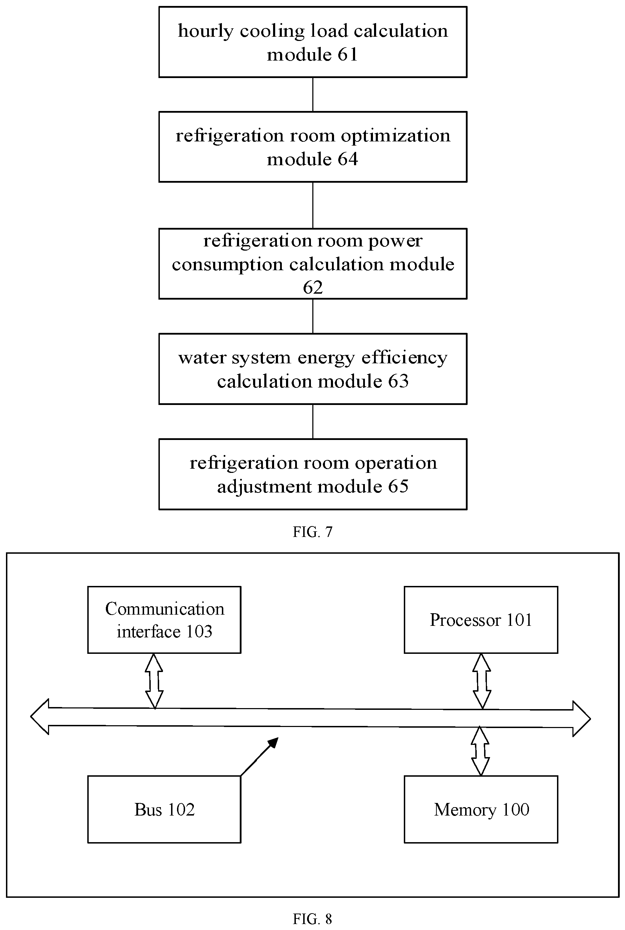

As shown in FIG. 7, which shows a structural schematic diagram of another device for calculating an energy efficiency of a refrigeration machine room, the device further includes: a refrigeration machine room optimization module 64; the hourly cooling load calculation module 61, the refrigeration machine room optimization module 64, and the refrigeration machine room power consumption calculation module 62 are sequentially connected. The refrigeration machine room optimization module 64 can be configured for obtaining a design drawing of the refrigeration machine room; adjusting lines of a pipeline network of the water system of the refrigeration machine room in the design drawing; adjusting selections of the chiller unit, the water pump, and the cooling tower of the refrigeration machine room in the design drawing; and adjusting a control system of the refrigeration machine room in the design drawing.

As shown in FIG. 7, the device for calculating the energy efficiency of the refrigeration machine room can further include: a refrigeration machine room operation adjustment module 65, which can be connected to the water system energy efficiency calculation module 63. The refrigeration machine room operation adjustment module 65 can be configured for analyzing based on the energy efficiency of the water system of the refrigeration machine room to optimize a system layout and an operation strategy of the refrigeration machine room.

Those skilled in the art can clearly understand that for the convenience and conciseness of the description, the specific working process of the device for calculating the energy efficiency of the refrigeration machine room described above can refer to the corresponding process in the embodiments of the method for calculating the energy efficiency of the refrigeration machine room mentioned above, which will not be repeated here.

Another embodiment of the present disclosure further provides an electronic device that can be used to run the method for calculating the energy efficiency of the refrigeration machine room mentioned above; as shown in FIG. 8, which shows a structural schematic diagram of an electronic device; the electronic device can include a memory 100 and a processor 101. The memory 100 can be configured to store one or more computer instructions, which are executed by the processor 101 to achieve the method for calculating the energy efficiency of the refrigeration machine room mentioned above.

Optionally, the electronic device shown in FIG. 8 may further include a bus 102 and a communication interface 103; the processor 101, the communication interface 103, and the memory 100 are connected through the bus 102.

The memory 100 may contain a high-speed Random Access Memory (RAM), it may also include non-volatile memory (e.g. at least one disk memory). The communication connection between the system network element and at least one of other network elements can be achieved through at least one communication interface 103 (wired or wireless), such as the Internet, WAN, local network, or metropolitan area network, etc.. The bus 102 can be an ISA bus, a PCI bus, or ab EISA bus. The bus can be divided into an address bus, a data bus, a control bus and so on. For ease of representation, FIG. 8 is represented by only a bidirectional arrow, but it does not mean that there is only one bus or one type of bus.

The processor 101 can be an integrated circuit chip with signal processing capabilities. In the implementation process, the steps of the above method can be completed by the hardware integrated logic circuit in the processor 101 or the software form of instructions. The processor 101 can be a general-purpose processor, including a Central Processing Unit (CPU) and a Network Processor (NP), etc.. It can also be a Digital Signal Processor (DSP), an Application Specific Integrated Circuit (ASIC), a Field-Programmable Gate Array (FPGA) or other programmable logic devices, discrete gate or transistor logic devices, and discrete hardware components. The methods, steps, and logic block diagrams disclosed in the embodiments of the present disclosure can be realized or executed. The general-purpose processor can be a microprocessor or the processor can be any conventional processor, etc. Steps incorporating the method disclosed in the embodiments may be directly represented as execution by a hardware decoding processor, or performed by a combination of hardware and software modules in the decoding processor. The software modules can be located in RAM, flash memory, read-only memory, programmable read-only memory or electrically erasable programmable memory, registers and other storage media mature in the field. The storage medium is located in the memory 100, and the processor 101 reads the information in the memory 100, combined with its hardware, to complete the steps of the method in the above embodiments.

The present embodiments also provide a computer readable storage medium that can store computer-executable instructions. When the computer executable instructions are invoked and executed by the processor, the computer executable instructions can prompt the processor to realize the above method for calculating the energy efficiency of the refrigeration machine room. The detailed descriptions can be referred to the embodiments of the above method, which will not be repeated herein.

The computer program products of the method and the device for calculating the energy efficiency of the refrigeration machine room, and electronic device provided by the embodiments may include a computer readable storage medium storing the program code, which includes instructions used to execute the steps in the embodiments of the method, the detailed descriptions can be referred to the embodiments of the above method, which will not be repeated herein.

It is clearly understood by those skilled in the art that, for convenience and simplicity of description, the specific working process of the system and/or device described above can be referred to the corresponding process in the embodiments of the method and will not be repeated herein.

In addition, in the description of the embodiments of the present disclosure, unless expressly specified and qualified otherwise, the terms "installation", "connection", "connecting" shall be understood broadly, for example, may be fixed connections, detachable connections, or integrated connections; which can be mechanical connection, can also be electrical connection; It can be directly connected, or it can be indirectly connected through an intermediate medium, and it can be the connection within the two components. For those skilled in the art, the specific meaning of the above terms in the present disclosure may be understood according to specific conditions.

The function, if implemented in the form of a software functional unit and sold or used as a stand-alone product, may be stored in a computer-readable storage medium. Based on this understanding, the technical solution of the present disclosure may be embodied in the form of a software product, which is stored in a storage medium and includes a number of instructions for making a computer device (which may be a personal computer, a server, or a network equipment, etc.) to perform all or part of the steps of the methods described in various embodiments of the present disclosure. The aforementioned storage medium includes: U disk, mobile hard disk, read-only Memory (ROM), Random Access memory (RAM), disk or disc and other media that can store program code.

In the description of the present disclosure, it should be noted that the orientation or position relationships indicated by the terms "center", "up", "down", "left", "right", "vertical", "horizontal", "inside", "outside", etc. are based on the orientation or position relationships shown in the attached drawings only for the purpose of facilitating the description of the present disclosure and simplifying the description. It is not an indication or implication that the device or element referred to must have a particular orientation, be constructed and operate in a particular orientation and therefore cannot be construed as a limitation of the present disclosure. In addition, the terms "first," "second," and "third" are used for descriptive purposes only and are not understood to indicate or imply relative importance.

Industrial utility

The present disclosure discloses a method and a device for calculating an energy efficiency of a refrigeration machine room, and an electronic device. The method includes the steps of: calculating an hourly cooling load of a cooling area; where the hourly cooling load of the cooling area represents a refrigerating capacity of the refrigeration machine room in various time periods; determining an hourly power consumption of a chiller unit, an hourly power consumption of a water pump, and an hourly power consumption of a cooling tower of the refrigeration machine room; and calculating an energy efficiency of a water system of the refrigeration machine room based on the hourly cooling load, the hourly power consumption of the chiller unit, the hourly power consumption of the water pump, and the hourly power consumption of the cooling tower. The energy efficiency calculation process in the method is refined, and the results are highly reliable. It can complete the simulation analysis of the energy efficiency of the refrigeration machine room throughout a year, and also provides a verification standard for the device optimization and system deepening results of the refrigeration machine room.

In addition, it is understood that the method and the device for calculating the energy efficiency of the refrigeration machine room, and the electronic device disclosed are reproducible and can be applied in a variety of industrial applications. For example, the method and the device for calculating the energy efficiency of the refrigeration machine room, and the electronic device of the present disclosure can be applied to the field of the central air-conditioning.

**Claims**

1.    A computer-implemented method for calculating an energy efficiency of a refrigeration machine room, comprising:

> calculating (S102, S202) an hourly cooling load of a cooling area; wherein the hourly cooling load of the cooling area represents a refrigerating capacity of the refrigeration machine room in various time periods;
> determining (S104, S206) an hourly power consumption of a chiller unit, an hourly power consumption of a water pump, and an hourly power consumption of a cooling tower of the refrigeration machine room; and
> calculating (S106, S208) an energy efficiency of a water system of the refrigeration machine room based on the hourly cooling load, the hourly power consumption of the chiller unit, the hourly power consumption of the water pump, and the hourly power consumption of the cooling tower;
> wherein the step of determining the hourly power consumption of the chiller unit of the refrigeration machine room comprises:

>> determining an hourly unit load, an hourly unit load rate, a chilled water outlet temperature, and a cooling water inlet temperature of the refrigeration machine room;
>> determining an hourly energy efficiency of the chiller unit of the refrigeration machine room based on the chilled water outlet temperature, the cooling water inlet temperature, and the hourly unit load rate; and

determining an hourly power consumption of the chiller unit based on the hourly energy efficiency of the chiller unit and the hourly unit load; and

wherein the chilled water outlet temperature is a constant value, and the step of determining the hourly energy efficiency of the chiller unit of the refrigeration machine room based on the chilled water outlet temperature, the cooling water inlet temperature, and the hourly unit load rate comprises:

calculating the hourly energy efficiency of the chiller unit of the refrigeration machine room by a following formula:

$$\text{COP} = a_1 + \frac{a_2}{t_{qi}} + a_3 \times k + \frac{a_4}{t_{qi}^2} + a_5 \times k^2 + \frac{a_6 \times \eta}{t_{qi}} + \frac{a_7}{t_{qi}^3} + a_8 \times \eta^3 + \frac{a_9 \times \eta^2}{t_{qi}} + \frac{a_{10} \times \eta}{t_{qi}^2}$$

wherein COP represents the hourly energy efficiency of the chiller unit of the refrigeration machine room, $a_1$-$a_{10}$ represent fitting coefficients, $t_{qi}$ represents the cooling water inlet temperature, and the $\eta$ represents the hourly unit load rate.

2. The computer-implemented method according to claim 1, wherein the step of calculating the hourly cooling load of the cooling area comprises:

establishing a first load model of the cooling area on a floor plan;
defining characteristic parameters of devices and each of room areas of the cooling area on the first load model; and
determining an hourly cooling load of each of the room areas in the refrigeration machine room based on the first load model.

3. The computer-implemented method according to claim 1, wherein the step of calculating the hourly cooling load of the cooling area comprises:

obtaining design parameters of the cooling area, and establishing a second load model of the refrigeration machine room based on the design parameters; and
determining the hourly cooling load of the cooling area based on the second load model.

4. The computer-implemented method according to claim 1, wherein the chilled water outlet temperature is a varying value, and the step of determining the hourly energy efficiency of the chiller unit of the refrigeration machine room based on the chilled water outlet temperature, the cooling water inlet temperature, and the hourly unit load rate comprises:

calculating the hourly energy efficiency of the chiller unit of the refrigeration machine room by a following formula:

$$\text{COP} = b_1 \times t_{do}^3$$
$$+ b_2 \times t_{qi}^3 + b_3 \times \eta^3 + b_4 \times t_{do}^2 \times t_{qi} + b_5 \times t_{do}^2 \times \eta + b_6 \times t_{qi}^2 \times t_{do} + b_7 \times t_{qi}^2$$
$$\times \eta + b_8 \times \eta^2 \times t_{do} + b_9 \times \eta^2 \times t_{qi} + b_{10} \times t_{do} + b_{11} \times t_{qi} + b_{12} \times \eta$$
$$+ b_{13} \times t_{do} \times t_{qi} \times \eta + b_{14}$$

wherein COP represents the hourly energy efficiency of the chiller unit of the refrigeration machine room, $b_1$-$b_{14}$ represent fitting coefficients, $t_{do}$ represents the chilled water outlet temperature, and $t_{qi}$ represent the cooling water inlet temperature, and the $\eta$ represents the hourly unit load rate.

5. The computer-implemented method according to any one of claims 1 to 4, wherein the step of determining the hourly power consumption of the water pump comprises:

calculating the hourly power consumption of the water pump of the refrigeration machine room by a following formula:

$$p_1 = (f/f_e)^a \times p_e;$$

or

$$p_1 = (Q/Q_e)^b \times p_e;$$

wherein $p_1$ represents the hourly power consumption of the water pump, a and b are constants between 2.2 and 2.5, f represents an actual operating frequency of the water pump, Q represents an actual operating flow rate of the water pump, $p_e$ represents a rated operating power of the water pump, $f_e$ represents a rated operating frequency of the water pump, and $Q_e$ represents a rated operating flow rate of the water pump.

6. The computer-implemented method according to any one of claims 1 to 4, wherein the step of determining the hourly power consumption of the cooling tower comprises:

   calculating the hourly power consumption of the cooling tower of the refrigeration machine room by a following formula: $p_2 = (Q/Q_e)^3 \times p_e$;
   wherein $p_2$ represents the hourly power consumption of the cooling tower, Q represents a flow rate value of a total cooling water flow rate of the refrigeration machine room entering a single cooling tower, $Q_e$ represents a rated flow rate of the cooling tower, and $p_e$ represents a rated power of the cooling tower.

7. The computer-implemented method according to any one of claims 1 to 4, wherein the step of calculating the energy efficiency of the water system of the refrigeration machine room based on the hourly cooling load, the hourly power consumption of the chiller unit, the hourly power consumption of the water pump, and the hourly power consumption of the cooling tower comprises:
   calculating the energy efficiency of the water system of the refrigeration machine room by a following formula:

$$EERs = \Sigma q / (\Sigma p + \Sigma p_1 + \Sigma p_2);$$

   wherein EERs represents the energy efficiency of the water system of the refrigeration machine room, q represents the hourly cooling load, p represents the hourly power consumption of the chiller unit, $p_1$ represents the hourly power consumption of the water pump, and $p_2$ represents the hourly power consumption of the cooling tower.

8. The computer-implemented method according to claim 7, wherein the hourly power consumption of the chiller unit is calculated based on the hourly energy efficiency of the chiller unit, and the hourly power consumption of the chiller unit is obtained by dividing the refrigerating capacity by the hourly energy efficiency of the chiller unit.

9. The computer-implemented method according to claim 7 or 8, wherein the water pump comprises a cooling water pump and a chilled water pump, and the hourly power consumption of the water pump is calculated by a following formula:
   $\Sigma p_1 = \Sigma$ hourly power consumption of the cooling water pumps + $\Sigma$ hourly power consumption of the chilled water pumps.

10. The computer-implemented method according to any one of claims 1 to 9, wherein before the step of determining the hourly power consumption of the chiller unit, the hourly power consumption of the water pump, and the hourly power consumption of the cooling tower of the refrigeration machine room; the method further comprises:

    obtaining (S204) a design drawing of the refrigeration machine room;
    adjusting lines of a pipeline network of the water system of the refrigeration machine room in the design drawing;
    adjusting selections of the chiller unit, the water pump, and the cooling tower of the refrigeration machine room in the design drawing; and
    adjusting a control system of the refrigeration machine room in the design drawing.

11. The computer-implemented method according to any one of claims 1 to 9, wherein after the step of calculating the energy efficiency of the water system of the refrigeration machine room based on the hourly cooling load, the hourly power consumption of the chiller unit, the hourly power consumption of the water pump, and the hourly power consumption of the cooling tower; the method further comprises:
analyzing based on the energy efficiency of the water system of the refrigeration machine room to optimize a system layout and an operation strategy of the refrigeration machine room.

12. A device for calculating an energy efficiency of a refrigeration machine room, comprising:

an hourly cooling load calculation module (61), configured for calculating (S102, S202) an hourly cooling load of a cooling area; wherein the hourly cooling load of the cooling area represents a refrigerating capacity of the refrigeration machine room in various time periods;
a refrigeration machine room power consumption calculation module (62), configured for determining (S104, S206) an hourly power consumption of a chiller unit, an hourly power consumption of a water pump, and an hourly power consumption of a cooling tower of the refrigeration machine room; and
a water system energy efficiency calculation module (63), configured for calculating (S106, S208) an energy efficiency of a water system of the refrigeration machine room based on the hourly cooling load, the hourly power consumption of the chiller unit, the hourly power consumption of the water pump, and the hourly power consumption of the cooling tower, and, comprising a processor (101) and a memory (100), wherein the memory (100) stores computer executable instructions capable of being executed by the processor (101), and the processor (101) is configured to execute the computer executable instructions to implement the according to any one of claims 1 to 11.

13. A computer readable storage medium storing computer executable instructions, wherein when the computer executable instructions are invoked and executed by a processor (101), the processor (101) is caused to implement the computer-implemented method according to any one of claims 1 to 11.

**Patentansprüche**

1. Computerimplementiertes Verfahren zum Berechnen einer Energieeffizienz eines Kältemaschinenraums, das Folgendes beinhaltet:

Berechnen (S102, S202) einer stündlichen Kühllast eines Kühlbereichs; wobei die stündliche Kühllast des Kühlbereichs eine Kältekapazität des Kältemaschinenraums in verschiedenen Zeiträumen darstellt;
Bestimmen (S104, S206) eines stündlichen Stromverbrauchs eines Kälteaggregats, eines stündlichen Stromverbrauchs einer Wasserpumpe und eines stündlichen Stromverbrauchs eines Kühlturms des Kältemaschinenraums; und
Berechnen (S106, S208) einer Energieeffizienz eines Wassersystems des Kältemaschinenraums auf der Basis der stündlichen Kühllast, des stündlichen Stromverbrauchs des Kälteaggregats, des stündlichen Stromverbrauchs der Wasserpumpe und des stündlichen Stromverbrauchs des Kühlturms;
wobei der Schritt des Bestimmens des stündlichen Stromverbrauchs des Kälteaggregats des Kältemaschinenraums Folgendes beinhaltet:

Bestimmen einer stündlichen Einheitslast, einer stündlichen Einheitslastrate, einer Kaltwasserauslasstemperatur und einer Kühlwassereinlasstemperatur des Kältemaschinenraums;
Bestimmen einer stündlichen Energieeffizienz des Kälteaggregats des Kältemaschinenraums auf der Basis der Kaltwasserauslasstemperatur, der Kühlwassereinlasstemperatur und der stündlichen Einheitslastrate; und
Bestimmen eines stündlichen Stromverbrauchs des Kälteaggregats auf der Basis der stündlichen Energieeffizienz des Kälteaggregats und der stündlichen Einheitslast; und
wobei die Kaltwasserauslasstemperatur ein konstanter Wert ist und der Schritt des Bestimmens der stündlichen Energieeffizienz des Kälteaggregats des Kältemaschinenraums auf der Basis der Kaltwasserauslasstemperatur, der Kühlwassereinlasstemperatur und der stündlichen Einheitslastrate Folgendes beinhaltet:

Berechnen der stündlichen Energieeffizienz des Kälteaggregats des Kältemaschinenraums anhand einer folgenden Formel:

$$\text{COP} = a_1 + \frac{a_2}{t_{qi}} + a_3 \times k + \frac{a_4}{t_{qi}^2} + a_5 \times k^2 + \frac{a_6 \times \eta}{t_{qi}} + \frac{a_7}{t_{qi}^3} + a_8 \times \eta^3 + \frac{a_9 \times \eta^2}{t_{qi}} + \frac{a_{10} \times \eta}{t_{qi}^2}$$

wobei COP die stündliche Energieeffizienz des Kälteaggregats des Kältemaschinenraums darstellt, $a_1$-$a_{10}$ Anpassungskoeffizienten darstellen, $t_{qi}$ die Kühlwassereinlasstemperatur darstellt und $\eta$ die stündliche Einheitslastrate darstellt.

2. Computerimplementiertes Verfahren nach Anspruch 1, wobei der Schritt des Berechnens der stündlichen Kühllast des Kühlbereichs Folgendes beinhaltet:

   Erstellen eines ersten Lastmodells des Kühlbereichs auf einem Grundriss;
   Definieren charakteristischer Parameter von Vorrichtungen und jedes der Raumbereiche des Kühlbereichs auf dem ersten Lastmodell; und
   Bestimmen einer stündlichen Kühllast jedes der Raumbereiche im Kältemaschinenraum auf der Basis des ersten Lastmodells.

3. Computerimplementiertes Verfahren nach Anspruch 1, wobei der Schritt des Berechnens der stündlichen Kühllast des Kühlbereichs Folgendes beinhaltet:

   Erhalten von Konstruktionsparametern des Kühlbereichs und Erstellen eines zweiten Lastmodells des Kältemaschinenraums auf der Basis der Konstruktionsparameter; und
   Bestimmen der stündlichen Kühllast des Kühlbereichs auf der Basis des zweiten Lastmodells.

4. Computerimplementiertes Verfahren nach Anspruch 1, wobei die Kaltwasserauslasstemperatur ein variabler Wert ist und der Schritt des Bestimmens der stündlichen Energieeffizienz des Kälteaggregats des Kältemaschinenraums auf der Basis der Kaltwasserauslasstemperatur, der Kühlwassereinlasstemperatur und der stündlichen Einheitslastrate Folgendes beinhaltet:

   Berechnen der stündlichen Energieeffizienz des Kälteaggregats des Kältemaschinenraums anhand einer folgenden Formel:

$$
\begin{aligned}
\text{COP} = \; & b_1 \times t_{do}^3 \\
& + b_2 \times t_{qi}^3 + b_3 \times \eta^3 + b_4 \times t_{do}^2 \times t_{qi} + b_5 \times t_{do}^2 \times \eta + b_6 \times t_{qi}^2 \times t_{do} + b_7 \times t_{qi}^2 \\
& \times \eta + b_8 \times \eta^2 \times t_{do} + b_9 \times \eta^2 \times t_{qi} + b_{10} \times t_{do} + b_{11} \times t_{qi} + b_{12} \times \eta \\
& + b_{13} \times t_{do} \times t_{qi} \times \eta + b_{14}
\end{aligned}
$$

   wobei COP die stündliche Energieeffizienz des Kälteaggregats des Kältemaschinenraums darstellt, $b_1$-$b_{14}$ Anpassungskoeffizienten darstellen, $t_{do}$ die Kaltwasserauslasstemperatur darstellt, $t_{qi}$ die Kühlwassereinlasstemperatur darstellt und $\eta$ die stündliche Einheitslastrate darstellt.

5. Computerimplementiertes Verfahren nach einem der Ansprüche 1 bis 4, wobei der Schritt des Bestimmens des stündlichen Stromverbrauchs der Wasserpumpe Folgendes beinhaltet:

   Berechnen des stündlichen Stromverbrauchs der Wasserpumpe des Kältemaschinenraums anhand einer folgenden Formel:

$$\text{p}_1 = (f/f_e)^a \times p_e \;\; ;$$

   oder

$$\text{p}_1 = (Q/Q_e)^b \times p_e \; ;$$

   wobei $p_1$ den stündlichen Stromverbrauch der Wasserpumpe darstellt, a und b Konstanten zwischen 2,2 und 2,5 sind, f eine Ist-Betriebsfrequenz der Wasserpumpe darstellt, Q eine Ist-Betriebsdurchflussrate der Wasserpumpe darstellt, $p_e$ eine Nennbetriebsleistung der Wasserpumpe darstellt, $f_e$ eine Nennbetriebsfrequenz der

Wasserpumpe darstellt und $Q_e$ eine Nennbetriebsdurchflussrate der Wasserpumpe darstellt.

6. Computerimplementiertes Verfahren nach einem der Ansprüche 1 bis 4, wobei der Schritt des Bestimmens des stündlichen Stromverbrauchs des Kühlturms Folgendes beinhaltet:

Berechnen des stündlichen Stromverbrauchs des Kühlturms des Kältemaschinenraums anhand einer folgenden Formel: $p_2 = (Q/Q_e)^3 \times p_e$;
wobei $p_2$ den stündlichen Stromverbrauch des Kühlturms darstellt, Q einen Durchflussratenwert einer in einen einzelnen Kühlturm eintretenden Gesamtkühlwasserdurchflussrate des Kältemaschinenraums darstellt, $Q_e$ eine Nenndurchflussrate des Kühlturms darstellt und $p_e$ eine Nennleistung des Kühlturms darstellt.

7. Computerimplementiertes Verfahren nach einem der Ansprüche 1 bis 4, wobei der Schritt des Berechnens der Energieeffizienz des Wassersystems des Kältemaschinenraums auf der Basis der stündlichen Kühllast, des stündlichen Stromverbrauchs des Kälteaggregats, des stündlichen Stromverbrauchs der Wasserpumpe und des stündlichen Stromverbrauchs des Kühlturms Folgendes beinhaltet:

Berechnen der Energieeffizienz des Wassersystems des Kältemaschinenraums anhand einer folgenden Formel;
$EERs = \Sigma q/(\Sigma p + \Sigma p_1 + \Sigma p_2)$; wobei EERs die Energieeffizienz des Wassersystems des Kältemaschinenraums darstellt, q die stündliche Kühllast darstellt, p den stündlichen Stromverbrauch des Kälteaggregats darstellt, $p_1$ den stündlichen Stromverbrauch der Wasserpumpe darstellt und $p_2$ den stündlichen Stromverbrauch des Kühlturms darstellt.

8. Computerimplementiertes Verfahren nach Anspruch 7, wobei der stündliche Stromverbrauch des Kälteaggregats auf der Basis der stündlichen Energieeffizienz des Kälteaggregats berechnet wird und der stündliche Stromverbrauch des Kälteaggregats durch Dividieren der Kältekapazität durch die stündliche Energieeffizienz des Kälteaggregats erhalten wird.

9. Computerimplementiertes Verfahren nach Anspruch 7 oder 8, wobei die Wasserpumpe eine Kühlwasserpumpe und eine Kaltwasserpumpe umfasst und der stündliche Stromverbrauch der Wasserpumpe anhand einer folgenden Formel berechnet wird:
$\Sigma p_1 = \Sigma$ stündlicher Stromverbrauch der Kühlwasserpumpen $+ \Sigma$ stündlicher Stromverbrauch der Kaltwasserpumpen.

10. Computerimplementiertes Verfahren nach einem der Ansprüche 1 bis 9, wobei vor dem Schritt des Bestimmens des stündlichen Stromverbrauchs des Kälteaggregats, des stündlichen Stromverbrauchs der Wasserpumpe und des stündlichen Stromverbrauchs des Kühlturms des Kältemaschinenraums das Verfahren ferner Folgendes beinhaltet:

Erhalten (S204) einer Konstruktionszeichnung des Kältemaschinenraums;
Justieren von Leitungen eines Rohrleitungsnetzes des Wassersystems des Kältemaschinenraums in der Konstruktionszeichnung;
Justieren von Auswahlen der Kühleinheit, der Wasserpumpe und des Kühlturms des Kältemaschinenraums in der Konstruktionszeichnung; und
Justieren eines Steuersystems des Kältemaschinenraums in der Konstruktionszeichnung.

11. Computerimplementiertes Verfahren nach einem der Ansprüche 1 bis 9, wobei nach dem Schritt des Berechnens der Energieeffizienz des Wassersystems des Kältemaschinenraums auf der Basis der stündlichen Kühllast, des stündlichen Stromverbrauchs des Kälteaggregats, des stündlichen Stromverbrauchs der Wasserpumpe und des stündlichen Stromverbrauchs des Kühlturms das Verfahren ferner Folgendes beinhaltet:
Analysieren, auf der Basis der Energieeffizienz des Wassersystems des Kältemaschinenraums, um ein Systemlayout und eine Betriebsstrategie des Kältemaschinenraums zu optimieren.

12. Vorrichtung zum Berechnen einer Energieeffizienz eines Kältemaschinenraums, die Folgendes umfasst:

ein Stündliche-Kühllast-Berechnungsmodul (61), konfiguriert zum Berechnen (S102, S202) einer stündlichen Kühllast eines Kühlbereichs; wobei die stündliche Kühllast des Kühlbereichs eine Kältekapazität des Kältemaschinenraums in verschiedenen Zeiträumen darstellt;
ein Kältemaschinenraum-Stromverbrauch-Berechnungsmodul (62), konfiguriert zum Bestimmen (S104, S206) eines stündlichen Stromverbrauch eines Kälteaggregats, eines stündlichen Stromverbrauchs einer Wasserpumpe und eines stündlichen Stromverbrauchs eines Kühlturms des Kältemaschinenraums; und

ein Wassersystem-Energieeffizienz-Berechnungsmodul (63), konfiguriert zum Berechnen (S106, S208) einer Energieeffizienz eines Wassersystems des Kältemaschinenraums auf der Basis der stündlichen Kühllast, des stündlichen Stromverbrauchs des Kälteaggregats, des stündlichen Stromverbrauchs der Wasserpumpe und des stündlichen Stromverbrauchs des Kühlturms, und

die einen Prozessor (101) und einen Speicher (100) umfasst, wobei der Speicher (100) vom Prozessor (101) ausführbare computerausführbare Befehle speichert und der Prozessor (101) zum Ausführen der computerausführbaren Befehle zum Implementieren des Verfahrens nach einem der Ansprüche 1 bis 11 konfiguriert ist.

13. Computerlesbares Speichermedium, das computerausführbare Befehle speichert, wobei, wenn die computerausführbaren Befehle von einem Prozessor (101) aufgerufen und ausgeführt werden, der Prozessor (101) zum Implementieren des computerimplementierten Verfahrens nach einem der Ansprüche 1 bis 11 veranlasst wird.

**Revendications**

1. Procédé mis en œuvre par ordinateur permettant de calculer un rendement énergétique d'une salle de machines frigorifiques, comprenant les étapes consistant à :

   calculer (S102, S202) une charge de refroidissement horaire d'une zone de refroidissement ; la charge de refroidissement horaire de la zone de refroidissement représentant une capacité frigorifique de la salle de machines frigorifiques à diverses périodes de temps ;
   déterminer (S104, S206) une consommation électrique horaire d'un groupe réfrigérateur, une consommation électrique horaire d'une pompe à eau et une consommation électrique horaire d'une tour de refroidissement de la salle de machines frigorifiques ; et
   calculer (S106, S208) un rendement énergétique d'un circuit hydraulique de la salle de machines frigorifiques sur la base de la charge de refroidissement horaire, de la consommation électrique horaire du groupe réfrigérateur, de la consommation électrique horaire de la pompe à eau et de la consommation électrique horaire de la tour de refroidissement ;
   l'étape consistant à déterminer la consommation électrique horaire du groupe réfrigérateur de la salle de machines frigorifiques comprenant les étapes consistant à :

      déterminer une charge horaire de groupe, un taux de charge horaire de groupe, une température de sortie d'eau réfrigérée et une température d'entrée d'eau de refroidissement de la salle de machines frigorifiques ;
      déterminer un rendement énergétique horaire du groupe réfrigérateur de la salle de machines frigorifiques sur la base de la température de sortie d'eau réfrigérée, de la température d'entrée d'eau de refroidissement et du taux de charge horaire de groupe ; et
      déterminer une consommation électrique horaire du groupe réfrigérateur sur la base du rendement énergétique horaire du groupe réfrigérateur et de la charge horaire de groupe ; et
      la température de sortie d'eau réfrigérée étant une valeur constante, et l'étape consistant à déterminer le rendement énergétique horaire du groupe réfrigérateur de la salle de machines frigorifiques sur la base de la température de sortie d'eau réfrigérée, de la température d'entrée d'eau de refroidissement et du taux de charge horaire de groupe comprenant l'étape consistant à :

         calculer le rendement énergétique horaire du groupe réfrigérateur de la salle de machines frigorifiques à l'aide de la formule suivante :

$$\text{COP} = a_1 + \frac{a_2}{t_{qi}} + a_3 \times k + \frac{a_4}{t_{qi}{}^2} + a_5 \times k^2 + \frac{a_6 \times \eta}{t_{qi}} + \frac{a_7}{t_{qi}{}^3} + a_8 \times \eta^3 + \frac{a_9 \times \eta^2}{t_{qi}} + \frac{a_{10} \times \eta}{t_{qi}{}^2}$$

         où COP représente le rendement énergétique horaire du groupe réfrigérateur de la salle de machines frigorifiques, $a_1$ à $a_{10}$ représentent des coefficients d'adaptation, $t_{qi}$ représente la température d'entrée d'eau de refroidissement et $\eta$ représente le taux de charge horaire de groupe.

2. Procédé mis en œuvre par ordinateur selon la revendication 1, l'étape consistant à calculer la charge de refroidissement horaire de la zone de refroidissement comprenant les étapes consistant à :

établir un premier modèle de charge de la zone de refroidissement sur un plan d'implantation ;

définir des paramètres caractéristiques de dispositifs et de chacune des zones de salle de la zone de refroidissement sur le premier modèle de charge ; et

déterminer une charge de refroidissement horaire de chacune des zones de salle dans la salle de machines frigorifiques sur la base du premier modèle de charge.

3. Procédé mis en œuvre par ordinateur selon la revendication 1, l'étape consistant à calculer la charge de refroidissement horaire de la zone de refroidissement comprenant les étapes consistant à :

obtenir des paramètres de conception de la zone de refroidissement et établir un second modèle de charge de la salle de machines frigorifiques sur la base des paramètres de conception ; et

déterminer la charge de refroidissement horaire de la zone de refroidissement sur la base du second modèle de charge.

4. Procédé mis en œuvre par ordinateur selon la revendication 1, la température de sortie d'eau réfrigérée étant une valeur variable, et l'étape consistant à déterminer le rendement énergétique horaire du groupe réfrigérateur de la salle de machines frigorifiques sur la base de la température de sortie d'eau réfrigérée, de la température d'entrée d'eau de refroidissement et du taux de charge horaire de groupe comprenant l'étape consistant à :

calculer le rendement énergétique horaire du groupe réfrigérateur de la salle de machines frigorifiques à l'aide de la formule suivante :

$$
\begin{aligned}
\mathrm{COP} = \; & b_1 \times t_{do}{}^3 \\
& + b_2 \times t_{qi}{}^3 + b_3 \times \eta^3 + b_4 \times t_{do}{}^2 \times t_{qi} + b_5 \times t_{do}{}^2 \times \eta + b_6 \times t_{qi}{}^2 \times t_{do} + b_7 \\
& \times t_{qi}{}^2 \times \eta + b_8 \times \eta^2 \times t_{do} + b_9 \times \eta^2 \times t_{qi} + b_{10} \times t_{do} + b_{11} \times t_{qi} + b_{12} \times \eta \\
& + b_{13} \times t_{do} \times t_{qi} \times \eta + b_{14}
\end{aligned}
$$

où COP représente le rendement énergétique horaire du groupe réfrigérateur de la salle de machines frigorifiques, $b_1$ à $b_{14}$ représentent des coefficients d'adaptation, $t_{do}$ représente la température de sortie d'eau réfrigérée, $t_{qi}$ représente la température d'entrée d'eau de refroidissement et $\eta$ représente le taux de charge horaire de groupe.

5. Procédé mis en œuvre par ordinateur selon l'une quelconque des revendications 1 à 4, l'étape consistant à déterminer la consommation électrique horaire de la pompe à eau comprenant l'étape consistant à :

calculer la consommation électrique horaire de la pompe à eau de la salle de machines frigorifiques à l'aide de la formule suivante :

$$
\mathrm{p}_1 = (f/f_e)^a \times p_e \;;
$$

ou

$$
\mathrm{p}_1 = (Q/Q_e)^b \times p_e;
$$

où $p_1$ représente la consommation électrique horaire de la pompe à eau, a et b sont des constantes comprises entre 2,2 et 2,5, f représente une fréquence de fonctionnement réelle de la pompe à eau, Q représente un débit de fonctionnement réel de la pompe à eau, $p_e$ représente une puissance de fonctionnement nominale de la pompe à eau, $f_e$ représente une fréquence de fonctionnement nominale de la pompe à eau et $Q_e$ représente un débit de fonctionnement nominal de la pompe à eau.

6. Procédé mis en œuvre par ordinateur selon l'une quelconque des revendications 1 à 4, l'étape consistant à déterminer la consommation électrique horaire de la tour de refroidissement comprenant l'étape consistant à :

calculer la consommation électrique horaire de la tour de refroidissement de la salle de machines frigorifiques à l'aide de la formule suivante : $p_2 = (Q/Q_e)^3 \times p_e$;

où $p_2$ représente la consommation électrique horaire de la tour de refroidissement, Q représente une valeur de débit d'un débit total d'eau de refroidissement de la salle de machines frigorifiques entrant dans une seule tour de refroidissement, $Q_e$ représente un débit nominal de la tour de refroidissement et $p_e$ représente une puissance nominale de la tour de refroidissement.

**7.** Procédé mis en œuvre par ordinateur selon l'une quelconque des revendications 1 à 4, l'étape consistant à calculer le rendement énergétique du circuit hydraulique de la salle de machines frigorifiques sur la base de la charge de refroidissement horaire, de la consommation électrique horaire du groupe réfrigérateur, de la consommation électrique horaire de la pompe à eau et de la consommation électrique horaire de la tour de refroidissement comprenant l'étape consistant à :

calculer le rendement énergétique du circuit hydraulique de la salle de machines frigorifiques à l'aide de la formule suivante :

$EERs = \Sigma q/(\Sigma p + \Sigma p_1 + \Sigma p_2)$ ; où EERs représente le rendement énergétique du circuit hydraulique de la salle de machines frigorifiques, q représente la charge de refroidissement horaire, p représente la consommation électrique horaire du groupe réfrigérateur, $p_1$ représente la consommation électrique horaire de la pompe à eau et $p_2$ représente la consommation électrique horaire de la tour de refroidissement.

**8.** Procédé mis en œuvre par ordinateur selon la revendication 7, la consommation électrique horaire du groupe réfrigérateur étant calculée sur la base du rendement énergétique horaire du groupe réfrigérateur, et la consommation électrique horaire du groupe réfrigérateur étant obtenue en divisant la capacité frigorifique par le rendement énergétique horaire du groupe réfrigérateur.

**9.** Procédé mis en œuvre par ordinateur selon la revendication 7 ou 8, la pompe à eau comprenant une pompe à eau de refroidissement et une pompe à eau réfrigérée, et la consommation électrique horaire de la pompe à eau étant calculée à l'aide de la formule suivante :

$\Sigma p_1 = \Sigma$ consommation électrique horaire des pompes à eau de refroidissement + $\Sigma$ consommation électrique horaire des pompes à eau réfrigérée.

**10.** Procédé mis en œuvre par ordinateur selon l'une quelconque des revendications 1 à 9, le procédé comprenant en outre, avant l'étape consistant à déterminer la consommation électrique horaire du groupe réfrigérateur, la consommation électrique horaire de la pompe à eau et la consommation électrique horaire de la tour de refroidissement de la salle de machines frigorifiques, les étapes consistant à :

obtenir (S204) un schéma de conception de la salle de machines frigorifiques ;
ajuster des conduites d'un réseau de canalisations du circuit hydraulique de la salle de machines frigorifiques sur le schéma de conception ;
ajuster des sélections du groupe réfrigérateur, de la pompe à eau et de la tour de refroidissement de la salle de machines frigorifiques sur le schéma de conception ; et
ajuster un système de commande de la salle de machines frigorifiques sur le schéma de conception.

**11.** Procédé mis en œuvre par ordinateur selon l'une quelconque des revendications 1 à 9, le procédé comprenant en outre, après l'étape consistant à calculer le rendement énergétique du circuit hydraulique de la salle de machines frigorifiques sur la base de la charge de refroidissement horaire, de la consommation électrique horaire du groupe réfrigérateur, de la consommation électrique horaire de la pompe à eau et de la consommation électrique horaire de la tour de refroidissement, l'étape consistant à :

effectuer une analyse sur la base du rendement énergétique du circuit hydraulique de la salle de machines frigorifiques afin d'optimiser une implantation de circuit et une stratégie de fonctionnement de la salle de machines frigorifiques.

**12.** Dispositif de calcul d'un rendement énergétique d'une salle de machines frigorifiques, comprenant :

un module de calcul de charge de refroidissement horaire (61), configuré pour calculer (S102, S202) une charge de refroidissement horaire d'une zone de refroidissement ; la charge de refroidissement horaire de la zone de refroidissement représentant une capacité frigorifique de la salle de machines frigorifiques à diverses périodes de temps ;
un module de calcul de consommation électrique de salle de machines frigorifiques (62), configuré pour déterminer (S104, S206) une consommation électrique horaire d'un groupe réfrigérateur, une consommation électrique horaire d'une pompe à eau et une consommation électrique horaire d'une tour de refroidissement de la salle de machines frigorifiques ; et

un module de calcul de rendement énergétique de circuit hydraulique (63), configuré pour calculer (S106, S208) un rendement énergétique d'un circuit hydraulique de la salle de machines frigorifiques sur la base de la charge de refroidissement horaire, de la consommation électrique horaire du groupe réfrigérateur, de la consommation électrique horaire de la pompe à eau et de la consommation électrique horaire de la tour de refroidissement, et comprenant un processeur (101) et une mémoire (100), la mémoire (100) stockant des instructions exécutables par ordinateur pouvant être exécutées par le processeur (101), et le processeur (101) étant configuré pour exécuter les instructions exécutables par ordinateur pour mettre en œuvre le procédé selon l'une quelconque des revendications 1 à 11.

13. Support de stockage lisible par ordinateur stockant des instructions exécutables par ordinateur, lorsque les instructions exécutables par ordinateur sont invoquées et exécutées par un processeur (101), le processeur (101) étant amené à mettre en œuvre le procédé mis en œuvre par ordinateur selon l'une quelconque des revendications 1 à 11.

calculating a hourly cooling load of a cooling area; and the hourly cooling load of the cooling area represents a refrigerating capacity of the refrigeration room in various time periods.

— S102

determining a hourly power consumption of a chiller unit, a hourly power consumption of a water pump, and a hourly power consumption of a cooling tower of the refrigeration room.

— S104

calculating an energy efficiency of a water system of the refrigeration room based on the hourly cooling load, the hourly power consumption of the chiller unit, the hourly power consumption of the water pump, and the hourly power consumption of the cooling tower.

— S106

FIG. 1

calculating a hourly cooling load of a cooling area; and the hourly cooling load of the cooling area represents a refrigerating capacity of the refrigeration room in various time periods.

S202

obtaining a design drawing of the refrigeration room; adjusting lines of a pipeline network of the water system of the refrigeration room in the design drawing; adjusting selections of the chiller unit, the water pump, and the cooling tower of the refrigeration room in the design drawing; and adjusting a control system of the refrigeration room in the design drawing.

S204

determining a hourly power consumption of a chiller unit, a hourly power consumption of a water pump, and a hourly power consumption of a cooling tower of the refrigeration room.

S206

calculating an energy efficiency of a water system of the refrigeration room based on the hourly cooling load, the hourly power consumption of the chiller unit, the hourly power consumption of the water pump, and the hourly power consumption of the cooling tower.

S208

FIG. 2

```
┌─────────────────────────────────┐
│   calculation of the annual hourly │
│          cooling load             │
└─────────────────────────────────┘
                 │
                 ▼
┌─────────────────────────────────┐
│   optimization of a pipeline      │◄──────┐
│   network of the water system     │       │
└─────────────────────────────────┘       │
                 │                         │
                 ▼                         │
┌─────────────────────────────────┐       │
│   device optimization and selection│      │
└─────────────────────────────────┘       │
                 │                         │
                 ▼                         │
┌─────────────────────────────────┐       │
│   automatic control system        │       │
│   optimization configuration      │       │
└─────────────────────────────────┘       │
                 │                         │
                 ▼                         │
┌─────────────────────────────────┐       │
│   annual energy efficiency         │       │
│   simulation calculation and       │       │
│          analysis                  │       │
└─────────────────────────────────┘       │
                 │                         │
                 ▼                         │
          ◇───────────────◇               │
         ╱                 ╲      Yes      │
        ╱  Whether further   ╲─────────────┘
        ╲  optimization is required ╱
         ╲                 ╱
          ◇───────────────◇
                 │ No
                 ▼
┌─────────────────────────────────┐
│         Output value              │
└─────────────────────────────────┘
```

FIG. 3

| Calculation results | | | | | | | | | | | | | |
|---|---|---|---|---|---|---|---|---|---|---|---|---|---|
| | month | 1 | 2 | 3 | 4 | 5 | 6 | 7 | 8 | 9 | 10 | 11 | 12 |
| Data analysis | Daily refrigerating capacity (RC) RT | 6821 | 7115 | 12343 | 17383 | 21557 | 24201 | 26315 | 25545 | 23180 | 15996 | 12335 | 6796 |
| | Daily power consumption (DPC) of host kwh | 2376 | 2526 | 5521 | 8710 | 11785 | 13809 | 15495 | 14858 | 13026 | 7913 | 5461 | 2282 |
| | DPC of chilled water pump | 338 | 348 | 639 | 927 | 1185 | 1334 | 1475 | 1427 | 1283 | 851 | 636 | 326 |
| | DPC of cooling water pump | 397 | 407 | 711 | 990 | 1263 | 1435 | 1566 | 1530 | 1382 | 920 | 703 | 390 |
| | DPC of cooling tower kwh | 122 | 124 | 188 | 241 | 300 | 340 | 355 | 353 | 329 | 232 | 182 | 121 |
| | DPC of refrigerating room | 3232 | 3661 | 7059 | 10869 | 14533 | 16917 | 18891 | 18158 | 16019 | 9916 | 6982 | 3120 |
| | Days | 31 | 28 | 31 | 30 | 31 | 30 | 31 | 31 | 30 | 31 | 30 | 31 |
| Energy consumption of COP | Sum of RC kwh | 743491 | 700422 | 1345330 | 1833519 | 2349660 | 2552704 | 2868249 | 2784348 | 2445042 | 1743462 | 1301071 | 740698 |
| | Sum of DPC of host kwh | 73652 | 70732 | 171166 | 261302 | 365320 | 414258 | 480354 | 16000 | 390775 | 245296 | 163931 | 70750 |
| | Sum of DPC of chilled water pump kwh | 10464 | 9751 | 19798 | 27813 | 36728 | 40021 | 45720 | 44248 | 38495 | 26376 | 19093 | 10107 |
| | Sum of DPC of cooling water pump kwh | 12302 | 11408 | 22026 | 29703 | 39159 | 43050 | 48560 | 47422 | 41446 | 28528 | 21079 | 12105 |
| | Sum of DPC of cooling tower | 3777 | 3482 | 5825 | 7241 | 9302 | 10188 | 10996 | 10928 | 9867 | 7196 | 5448 | 3750 |
| | Sum of DPC of refrigerating room kwh | 100194 | 102498 | 218815 | 326059 | 450508 | 507517 | 585629 | 563197 | 480583 | 307397 | 209451 | 96712 |
| | COP of host | 10.09 | 9.9 | 7.86 | 7.02 | 6.43 | 6.16 | 5.97 | 6.05 | 6.26 | 7.11 | 7.94 | 10.47 |
| | EER of refrigerating room | 7.42 | 6.83 | 6.15 | 5.62 | 5.22 | 5.03 | 4.9 | 4.94 | 5.09 | 5.67 | 6.21 | 7.66 |

FIG. 4

| chilled unit | Sum of power consumptions (kwh) | 3168036 | annual average COP of chilled unit | 6.76 |
|---|---|---|---|---|
| chilled water pump | Sum of power consumptions (kwh) | 328613 | Transport coefficient of chilled water pump WTFchw | 34 |
| cooling water pump | Sum of power consumptions (kwh) | 356787 | Transport coefficient of colling water pump WTFcw | 69 |
| cooling tower | Sum of power consumptions (kwh) | 87998 | Transport coefficient of cooling tower WTFcT | 279 |
| refrigerating room | Sum of power consumptions (kwh) | 3941435 | annual average EER of refrigerating room | 5.43 |
| | Sum of refrigerating capacity (RTh) | 6088736 | | |

FIG. 5

```
┌─────────────────────────────────┐
│  hourly cooling load calculation │
│           module 61              │
└─────────────────────────────────┘
                 │
┌─────────────────────────────────┐
│   refrigeration room power       │
│ consumption calculation module   │
│              62                  │
└─────────────────────────────────┘
                 │
┌─────────────────────────────────┐
│  water system energy efficiency  │
│     calculation module 63        │
└─────────────────────────────────┘
```

FIG. 6

hourly cooling load calculation module 61

refrigeration room optimization module 64

refrigeration room power consumption calculation module 62

water system energy efficiency calculation module 63

refrigeration room operation adjustment module 65

FIG. 7

Communication interface 103

Processor 101

Bus 102

Memory 100

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111076345 A